(19) Europäisches Patentamt
European Patent Office
Office européen des brevets

(11) **EP 1 659 000 B1**

(12) **EUROPEAN PATENT SPECIFICATION**

(45) Date of publication and mention
of the grant of the patent:
**04.06.2008 Bulletin 2008/23**

(51) Int Cl.:
***B60C 9/00*** (2006.01)     ***B60C 9/18*** (2006.01)

(21) Application number: **05024553.9**

(22) Date of filing: **10.11.2005**

(54) **Pneumatic tire and method of producing the same**

Luftreifen und Methode zu seiner Herstellung

Bandage pneumatique et méthode pour sa fabrication

(84) Designated Contracting States:
**DE FR GB**

(30) Priority: **17.11.2004 JP 2004333514**

(43) Date of publication of application:
**24.05.2006 Bulletin 2006/21**

(73) Proprietor: **Sumitomo Rubber Industries, Ltd.**
**Kobe-shi**
**Hyogo-ken (JP)**

(72) Inventors:
• **Uchida, Mamoru**
**3-chome,Chuo-ku**
**Kobe-shi,**
**Hyogo 651-0072 (JP)**
• **Wada, Takao**
**3-chome,Chuo-ku**
**Kobe-shi,**
**Hyogo 651-0072 (JP)**

• **Hirayama, Tomoaki**
**3-chome,Chuo-ku**
**Kobe-shi,**
**Hyogo 651-0072 (JP)**

(74) Representative: **Manitz, Finsterwald & Partner**
**GbR**
**Postfach 31 02 20**
**80102 München (DE)**

(56) References cited:
• **PATENT ABSTRACTS OF JAPAN vol. 2000, no. 04, 31 August 2000 (2000-08-31) & JP 2000 007839 A (BRIDGESTONE CORP), 11 January 2000 (2000-01-11)**
• **PATENT ABSTRACTS OF JAPAN vol. 2002, no. 05, 3 May 2002 (2002-05-03) & JP 2002 029213 A (SUMITOMO RUBBER IND LTD), 29 January 2002 (2002-01-29)**

**Description**

BACKGROUND OF THE INVENTION

Field of the Invention

The present invention relates to pneumatic tires capable of providing reduced rolling resistance and increased durability and methods of producing such tires.

Description of Related Art

Pneumatic tires are required to provide reduced rolling resistance to provide enhanced fuel economy to achieve reduced fuel cost, and to allow running vehicles to emit reduced amounts carbon dioxide or similar gas for environmental protection. Pneumatic tires are also required to have durability in running for long periods of time. Typically tires are provided with a tire cord formed of steel, organic fiber and/or the like as a reinforcement member, and pneumatic tires are also provided with a steel cord mainly at the tread or the like. If the reinforcement member is the steel cord the steel cord is typically coated with coating rubber so that the steel cord and rubber can achieve enhanced adhesion therebetween.

For example Japanese Patent Laying-open Nos. 03-252431 and 07-196850 propose employing silica and S-SBR to form tread rubber to provide improved wet braking performance. The proposed tread rubber, however, still has room for improving the effect of increasing the tire's rolling resistance and wet braking performance.

Japanese Patent Laying-open No. 07-017208 discloses a product formed of a stack of layers that combines together and thus containing dithiodipropionic acid, carbon black and, for some cases, silica as a rubber compound or a member thereof that is bonded to a steel cable reinforcing a tire, and a methylene donor serving as a portion used to increase a cord's adhesion. If this product contains a small amount of silica it can provide insufficiently reduced rolling resistance.

Japanese Patent Laying-open No. 08-230411 proposes a tire employing a specified silica having a CTAB and BET surface areas having a value or less to reduce a tread breaker's hysteresis loss to achieve reduced rolling resistance. According to this publication, a rubber compound for example having a large amount of silica bended therein can provide small hysteresis loss and hence achieve reduced rolling resistance. However, when it is kneaded it tends to exhibit poor workability, and when coating rubber is placed on top of a steel cord it tends to exhibit poor rollability. Furthermore if the rubber compound having the large amount of silica blended therein is used, then after the steel cord is coated with the rubber compound when the steel cord is cut to have a predetermined dimension the rubber compound tends to shrink resulting in the steel cord having a cut edge insufficiently coated with the rubber compound. If a vehicle runs with a steel cord having an edge with a portion uncoated with the rubber compound the edge's generated strain and heat can damage the tire. This can provide the tire with insufficient durability.

Japanese Patent Laying-open No. 2000-007839 proposes a steel cord coating compound containing in particular 3 to 30 parts by weight of powdery silica having a nitrogen surface area of 150 $m^2/g$ or less relative in particular to 100 parts by weight of a rubber component. If the compound contains a small amount of the silica it provides high hysteresis and can hardly reduce the tire's rolling resistance.

Japanese Patent Laying-open No. 2000-234036 discloses that for a compound with a particular, synthetic polyisoprene as a base, a tire has a bottom with an elastomeric internal filler compound's reinforcement filler implemented by a particular silica and/or a white alumina filler of at least 15 phr and at most 40 phr having a specific surface area of 30 to 260 $m^2/g$, or a blend of the white filler and carbon black having a BET surface area of 30 to 160 $m^2/g$. If this compound is used for example to coat a metal wire, they may have insufficient adhesion therebetween as their adhesion is not considered, and a tire insufficient in durability may be provided.

Japanese Patent Laying-open No. 2003-064222 proposes a rubber compound containing an inorganic filler, a silane coupling agent, and a vegetable oil having an iodine number of 130 or less. If this rubber compound is used to produce a tire the tire can provide reduced rolling resistance. If the rubber compound is used to coat a steel cord, however, a tire insufficient in durability can be provided as the rubber compound and steel cord's adhesion is not considered.

SUMMARY OF THE INVENTION

The present invention overcome the above disadvantage and it contemplates a pneumatic tire capable of providing both reduced rolling resistance and enhanced durability, and a method of producing the same.

The present invention is a pneumatic tire having a reinforcement layer formed of a steel cord coated with coating rubber, the reinforcement layer being at least one of a carcass, a bead reinforcement layer, a side reinforcement layer and a belt, the coating rubber being formed of a rubber compound containing 100 parts by mass of diene rubber, 30 to 80 parts by mass of silica having a nitrogen surface area of at least 70 m$^2$/g and at most 150 m$^2$/g, 1 to 15 parts by mass of a silane coupling agent, and organic acid cobalt salt.

Preferably the silane coupling agent is represented by a general formula:

$$(RO)_3\text{-Si-}(CH_2)_x\text{-}(S)_n\text{-}(CH_2)_x\text{-Si-}(OR)_3 \qquad (I)$$

wherein "R" represents an alkyl group having a straight or branched chain of 1-8 carbon atoms and "x" represents an integer of 1-8, and a molecule with n = 2 has a proportion of 60% by mass of an entirety of the silane coupling agent and "n" has an average value falling within a range of 2 to 3.

In the present invention preferably an edge strip of rubber (also referred to as edge covering rubber) is provided to coat the steel cord of a cut edge of a breaker.

Preferably the edge strip of rubber is formed of a rubber compound containing 100 parts by mass of diene rubber, 30 to 80 parts by mass of silica having a nitrogen surface area of at least 70 m$^2$/g and at most 150 m$^2$/g, and 1 to 15 parts by mass of a silane coupling agent.

Still preferably the edge strip's rubber compound contains organic acid cobalt salt.

Still preferably the complex modulus of elasticity (A) of the edge strip's rubber compound and the complex modulus of elasticity (B) of the coating rubber's rubber compound, satisfy $^{(A)}/_{(B)} > 1$.

In the present invention preferably the edge strip's rubber compound and/or the coating rubber's rubber compound contain(s) a resin containing resorcinol as a main component.

The present invention also provides a method of producing a pneumatic tire having a reinforcement layer formed of a steel cord coated with coating rubber, the reinforcement layer being at least one of a carcass, a bead reinforcement layer, a side reinforcement layer and a belt, the method comprising the step of: kneading 100 parts by mass of diene rubber, 30 to 80 parts by mass of silica having a nitrogen surface area of at least 70 m$^2$/g and at most 150 m$^2$/g, 1 to 15 parts by mass of a silane coupling agent, and organic acid cobalt salt together at at least 130°C and at most 160°C to form a rubber compound for the coating rubber; and employing the rubber compound to coat the steel cord to form a reinforcement layer.

The present invention can provide a pneumatic tire providing reduced rolling resistance to achieve enhanced fuel economy and reduced environmental burden while allowing the steel cord and the coating rubber to have satisfactory adhesion therebetween to also enhance the tire's durability. More specifically the present pneumatic tire can reduce the hysteresis of the coating rubber's compound to provide reduced rolling resistance and also improve the compound's reinforcement effect and the compound and steel cord's adhesion to improve the tire's durability.

The foregoing and other objects, features, aspects and advantages of the present invention will become more apparent from the following detailed description of the present invention when taken in conjunction with the accompanying drawings.

BRIEF DESCRIPTION OF THE DRAWINGS

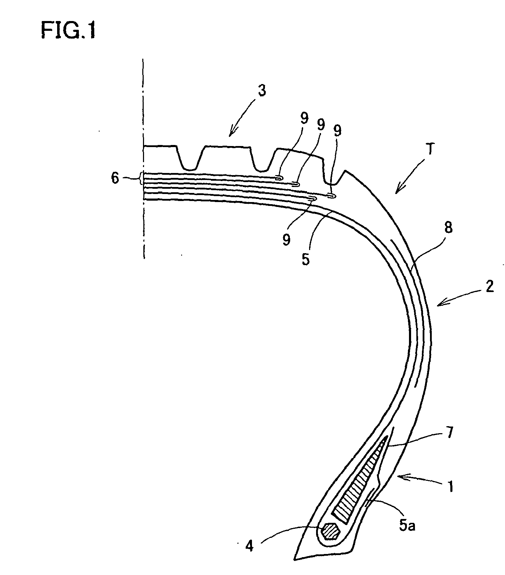

Fig. 1 is a cross section showing a right half of the present pneumatic tire.

DESCRIPTION OF THE PREFERRED EMBODIMENTS

The present invention is a pneumatic tire having a reinforcement layer that is formed of a steel cord coated with coating rubber and is at least one of a carcass, a bead reinforcement layer, a side reinforcement layer and a belt, and the coating rubber contains 100 parts by mass of diene rubber, 30 to 80 parts by mass of silica having a nitrogen surface area of at least 70 m$^2$/g and at most 150 m$^2$/g, 1 to 15 parts by mass of a silane coupling agent, and organic acid cobalt salt.

Fig. 1 shows an example of a pneumatic tire for a vehicle. However, the present invention is not limited to a tire for a vehicle and is generally applicable to tires for trucks, busses, heavy vehicles and the like. A tire T has a pair of beads 1, a pair of sidewalls 2, a tread 3 directly adjacent to sidewall 2, and includes a carcass extending between a pair of bead cores 4 formed of bead wire buried in bead 1, and a belt 6 reinforcing tread 3 at an outer periphery of carcass 5. Carcass 5 has a main body extending between the pair of bead cores 4, and a bent portion 5a wound around bead core 4 from an inner side to an outer side, as seen in the tire's radial direction, and extending upward. Carcass 5 is implemented by a steel cord or an aramid or similar, ultrahigh strength organic fiber cord that is radially arranged.

The present pneumatic tire has the steel cord coated with coating rubber to provide a reinforcement layer, which is at least one of the Fig. 1 carcass 5, belt 6, bead reinforcement layer 7 and side reinforcement layer 8 formed preferably of at least two steel cords in a radial structure. Furthermore, the steel cord has a cut edge of a breaker preferably provided with an edge strip of rubber 9.

The present coating rubber is formed of a coating rubber compound containing 100 parts by mass of diene rubber, 30 to 80 parts by mass of silica having a nitrogen surface area of at least 70 $m^2/g$ and at most 150 $m^2/g$, 1 to 15 parts by mass of a silane coupling agent, and organic acid cobalt salt.

The diene rubber can be natural rubber and/or synthetic rubber, and the synthetic rubber can include an ethylene-propylene-diene monomer (EPDM), styrene butadiene rubber (SPR), butadiene rubber, isoprene rubber, butyl rubber, halogenated butyl rubber, acrylonitrile-butadiene rubber (NBR), and the like. In the present invention the natural rubber and/or the synthetic rubber can singly be used or two types or more thereof can be combined together and used.

The coating rubber compound that contains silica can provide reduced hysteresis loss allowing a tire to provide reduced rolling resistance. If the silica providing a nitrogen surface area of 70 $m^2/g$ or more is blended the rubber compound can be sufficiently effectively reinforced and its hysteresis can be sufficiently effectively reduced. If the silica providing a nitrogen surface area is 150 $m^2/g$ or less is blended the rubber compound can be prevented from having a Mooney viscosity excessively increasing and thus increasing the risk of providing impaired workability in applying the rubber compound to coat the steel cord. The silica preferably provides a nitrogen surface area of 80 $m^2/g$ or more, in particular, more preferably 90 $m^2/g$ or more, and also preferably it provides a nitrogen surface area of 130 $m^2/g$ or less. Note that the silica's nitrogen surface area can be measured by a method conforming to ASTM-D-4820-93.

The present coating rubber compound contains 30 to 80 parts by mass of the above described, prescribed silica blended relative to 100 parts by mass of diene rubber. Thirty parts by mass or more of the silica is blended the coating rubber compound's hysteresis loss can sufficiently be reduced to provide a tire having a rolling resistance effectively reduced to an extent as desired. Introducing 80 parts by mass or less or the silica can prevent excessively increased Mooney viscosity and hence impaired workability. Preferably, 40 parts by mass or more, in particular, more preferably 50 parts by mass or more of the silica, and preferably 70 parts by mass or less thereof is blended.

In the present invention the silica blended may for example be any of dry silica produced through combustion, arc discharge or the like, and wet silica produced through sedimentation, gelation or the like. However, that having a surface with a large number of silanol groups is preferably used in that the coating rubber compound and the steel cord can achieve satisfactory adhesion therebetween. Furthermore the silica may be singly be used or two types or more thereof may be combined together and used. If two types or more thereof are combined together and used they are better combined such that their nitrogen surface areas as averaged out fall within a range of 70 to 150 $m^2/g$.

The present coating rubber compound contains 1-15 parts by mass of the silane coupling agent relative to 100 parts by mass of the diene rubber. The silane coupling agent typically has a chemical structure having two different types of functional groups bonded to Si. One functional group is selected for example from vinyl group, epoxy group, amino group, methacryl group, mercapto group, and other similar functional group highly reactive with organic material, and the other functional group is selected for example from methoxy group, ethoxy group and other similar functional group highly reactive with inorganic material. In the present invention the coating rubber compound having the silane coupling agent blended therein allows the silica blended in the rubber compound to more significantly effectively reinforce the rubber compound.

The silane coupling agent blended in an amount of 1 parts by mass or more relative to 100 parts by mass of the diene rubber can sufficiently effectively reinforce the rubber compound, and introducing 15 parts by mass or less of the silane coupling agent can prevent excessively increased Mooney viscosity and thus reduce the risk of inviting impaired workability. Preferably 2 parts by mass or more of the silane coupling agent, in particular, and preferably 14 parts by mass or less, more preferably 12 parts by mass thereof is blended.

The silane coupling agent can preferably be one of those having a thiol-, amine-, halogen-bounded and similar functional groups or two or more types thereof in combination.

In particular, in the present invention, the silane coupling agent is represented by the following, general formula:

$$(RO)_3\text{-Si-}(CH_2)_x\text{-}(S)_n\text{-}(CH_2)_x\text{-Si-}(OR)_3 \qquad (I)$$

wherein "R" represents an alkyl group having a straight or branched chain of 1-8 carbon atoms and "x" represents an integer of 1-8. In formula (I) it is preferable that a molecule with n = 2 has a proportion of 60% by mass of the entirety of the silane coupling agent and that n falls within a range of 2 to 3. IfR has a carbon number of 1 or more the presence of alkoxy group allows the silane coupling agent and the silica to satisfactorily bind. R having a carbon number of 8 or less is preferable as the silane coupling agent and silica's affinity is not impaired.

In formula (I) x is an integer of 1 to 8. For an x of 1 or more the silane coupling agent can be chemically stable and its decomposition and degradation in the rubber compound can be reduced. An x of 8 or less allows a desired reinforcement effect to be achieved without the silane coupling agent blended in excessive amounts, which is advantageous in terms of production cost.

Furthermore it is particularly preferable that the molecule with n = 2 has the proportion of 60% by mass of the entirety of the silane coupling agent, with n having an average value falling within the range of 2 to 3 because the silane coupling agent and diene rubber's affinity can sufficiently be ensured while the rubber compound's reinforcement effect can be maintained for long period of time.

Increasing temperature when they are kneaded can promote the silica and silane coupling agent's reaction and also allows the silane coupling agent to discharge a limited amount of sulfur and thus can reduce sulfur cross-linking attributed to temperature applied while kneading. The rubber can thus have satisfactory workability.

In the present invention preferably the silane coupling agent includes bis (3-triethoxysilylpropyl) tetrasulfide, bis (3-trimethoxysilylpropyl) tetrasulfide, bis (2-triethoxysilylpropyl) tetrasulfide, bis (triethoxysilyletyltolylene) polysulfide, 3-mercaptopropyltriethoxysilane, 2-mercaptoethyltrimethoxysilane, and the like.

The present coating rubber compound contains organic acid cobalt salt blended therein. This can provide enhanced adhesion between the steel cord and the coating rubber compound and , in particular, advantageously allows the coating rubber compound immediately after vulcanization to present excellent initial adhesion. The organic acid cobalt salt is obtained as a salt of organic acid and cobalt. The organic acid may be any of saturated and unsaturated organic acids, and furthermore, may be in the form of a straight chain or a branched chain. More specifically, it can include neodecanoic acid, stearic acid, naphthenic acid, rosin, talloil acid, oleic acid, linoleic acid, linolenic acid, boric acid, and the like by way of example. In particular, cobalt stearate, cobalt naphthenate, cobalt borate, and cobalt oleate can preferably be blended as they significantly effectively enhance the steel cord and coating rubber compound's adhesion. Note that in the present invention the coating rubber compound contains the organic acid cobalt salt blended in an amount set to fall within a range of 0.5-3 parts by mass as 10% by weight of a cobalt containing salt relative to 100 parts by mass of the diene rubber. Blending 0.5 parts by mass or more of the organic acid cobalt salt allows the steel cord and coating rubber compound's adhesion to be effectively enhanced to an extent as desired. Blending 3 parts by mass or less thereof reduces the risk of inviting reduced anti-degradation adhesion between the steel cord and the coating rubber compound that is caused as the organic acid cobalt salt facilitates the rubber to thermally degrade. Preferably the organic acid cobalt salt is blended in an amount in particular of 1 parts by mass or more and 2.5 parts by mass or less, more preferably 2 parts by mass or less relative to 100 parts by mass of the diene rubber.

In the present invention preferably an edge strip of rubber is provided to coat the steel cord of a cut edge of a breaker. Typically in its production process the steel cord is cut to have a prescribed length, and applied internal to a tire. If the steel cord is coated with coating rubber, however, then thermal history in the production process can cause the coating rubber to shrink resulting in the steel cord or breaker having a cut edge with a portion uncoated with the coating rubber. Such a portion exposes the steel cord, which impairs the tire's durability. In the present invention preferably the cut edge is coated with the edge strip of rubber to entirely coat the steel cord with rubber. The tire can thus be enhanced in durability.

If the breaker's cut edge is provided with the edge strip of rubber the edge strip of rubber is preferably formed of a rubber compound containing 100 parts by mass of diene rubber, 30-80 parts by mass of silica having nitrogen surface area of at least 70 $m^2/g$ and at most 150 $m^2/g$, and 1-15 of silane coupling agent. The edge strip of rubber can satisfactorily adhere to the steel cord, and the tire's durability can be improved sufficiently effectively.

Furthermore the edge strip's rubber compound preferably contains organic acid cobalt salt blended therein. The edge strip's rubber compound and steel cord's adhesion can be particularly satisfactorily enhanced. The organic acid cobalt salt is preferably blended in an amount of 0.5 parts by mass or more and 3 parts by mass or less relative to 100 parts by mass of the diene rubber.

In the present invention if the breaker's cut edge is provided with the edge strip of rubber the complex modulus of elasticity (A) of the edge strip's rubber compound and the complex modulus of elasticity (B) of the coating rubber compound preferably satisfy $^{(A)}/_{(B)} > 1$. This allows the edge strip's rubber compound to tend to thermally shrink less than the coating rubber compound. This ensures that the breaker's cut edge is coated with the edge strip's rubber compound, and the tire can be enhanced in durability. Furthermore, with the breaker's cut edge coated with the edge strip of rubber excellent in physical strength, durability against stress caused when the tire runs is also satisfactorily provided. $^{(A)}/_{(B)} > 1$ is preferable in that the edge strip's rubber compound and the coating rubber compound can be prepared to reduce the former rubber compound's thermal shrinkage and also ensure that the latter rubber compound has adequate elasticity. $^{(A)}/_{(B)} < 2$ is preferable in that it can prevent stress concentration attributed to a difference in physical property between the rubber compounds caused while the tire runs, ensuring that the tire has durability.

Note that the complex moduli of elasticity can be measured for example with a viscoelasticity spectrometer at 70°C and a frequency of 10 Hz with an initial strain of 10% and an amplitude of 2%.

In the present invention the edge strip's rubber compound and/or the coating rubber compound preferably contain(s) a resin containing resorcinol as a main component. Such resin includes a resorcinol- formaldehyde condensation product or the like by way of example. Note that "containing resorcinol as a main component" indicates that a portion in the resin that derives from resorcinol is 50% by mass or more of the entirety of the resin. The edge strip's rubber compound and/or coating rubber compound containing a resin containing resorcinol as a main component can achieve enhanced adhesion thereof to the steel cord and thus enhance the tire's durability.

In the present invention the coating rubber compound and the edge strip's rubber compound can also have blended therewith components used for typical rubber products, as follows:

Filler: Other than silica, for example carbon black, titanate oxide, magnesium oxide, calcium carbonate, magnesium carbonate, aluminum hydroxide, magnesium hydroxide, clay, talc or the like or two or more thereof combined together can be blended within a range for example of 5-20 parts by mass relative to 100 parts by mass of the diene rubber.

Vulcanizing agent: Organic peroxide and a sulfur based vulcanizing agent are preferably used and may be blended within a range of 3-8 parts by mass relative to 100 parts by mass of the diene rubber. The organic peroxide can be benzoyl peroxide, dicumyl peroxide, di-t-butylperoxide, t-butylcumylperoxide, methylethylketoneperoxide, cumenehydroperoxide, 2,5-dimethyl-2,5-di(t-butylperoxy)hexane or the like or two or more thereof. Furthermore , the sulfur based vulcanizing agent can be sulfur, morpholinedisulfide or the like or two or more thereof.

Vulcanization accelerator: Sulfeneamide-, thiazole-, thiuram-, thiourea-, guanidine-, dithiocarbamate-, aldehyde-amine-, or aldehyde-ammonium-, imidazoline- or xanthate-based vulcanization accelerator, or two or more thereof can be blended.

Antioxidant: amine-, phenol- or imidazol-based antioxidant, metallic carbamate, wax or the like or two or more thereof can be blended.

Softener: Process oil, lubricating oil, paraffin, liquid paraffin, petroleum asphalt, vaseline or similar petroleum-based softener, castor oil, linseed oil, rapeseed oil, coconut oil or similar fatty oil-based softener, beeswax, carnauba wax, lanolin or similar waxes, talloil, factice, linolic acid, palmitic acid, stearic acid, lauric acid or the like can be blended.

Plasticizer: For example dimethyl phthalate (DMP), diethyl phthalate (DEP), dibutyl phthalate (DBP), diheptyl phthalate (DHP), dioctyl phthalate (DOP), diisononyl phthalate (DINP), diisodecyl phthalate (DIDP), butyl benzyl phthalate (BBP), dilauryl phthalate (DLP), dicyclohexyl phthalate (DCHP) or the like can be blended.

Scorch preventer or retarder: Phthalic anhydride, salicylic acid, benzoic acid or similar organic acid, N-nitrosodiphenylamine or similar nitroso compound, N-cyclohexylthiophthalimide or the like can be blended.

The present pneumatic tire can be manufactured by a method including the steps of: kneading 100 parts by mass of diene rubber, 30 to 80 parts by mass of silica having a nitrogen surface area of at least 70 $m^2$/g and at most 150 $m^2$/g, 1 to 15 parts by mass of a silane coupling agent, and organic acid cobalt salt at at least 130°C and at most 160°C to obtain a coating rubber compound; and coating a steel cord with the coating rubber compound to form a reinforcement layer.

Kneading the coating rubber compound and an edge strip's rubber at at least 130°C allows them to be kneaded in a relatively short period of time and thus produced efficiently. Kneading at at most 160°C can contribute to reduced reaction of the silane coupling agent being kneaded with a polymer component and thus prevent excessively increased Mooney viscosity to maintain satisfactory workability in operations such as extrusion, topping and the like.

If in the present invention the edge strip of rubber is introduced the reinforcement layer that has been cut to have a prescribed length corresponding to a single tire to provide a breaker preferably has a cut edge coated with the edge strip's rubber compound formed in a sheet.

Examples

Hereinafter examples will be described to more specifically describe the present invention, although the present invention is not limited thereto.

The components to be blended excluding sulfur and the vulcanization accelerator were introduced into a sealed mixer and kneaded with a discharging temperature set at 155°C and subsequently the sulfur and the vulcanization accelerator were added thereto and together further kneaded at 95°C to obtain a coating rubber compound and an edge strip's rubber compound. Their complex moduli of elasticity were measured with a viscoelasticity spectrometer produced by IWAMOTO Quartz Glass Lab Co., Ltd. at 70°C and a frequency of 10 Hz with an initial strain of 10% and an amplitude of 2%. Furthermore, Mooney viscosity was represented by an index indicating a comparative example 1 as 100 for ML1+4 for 130°C.

Table 1

| | | coating rubber compound | | | edge strip's rubber compound |
|---|---|---|---|---|---|
| | | ex. 1 | comparative ex.1 | comparative ex.2 | |
| blending | natural rubber [1] | 100 | 100 | 100 | 100 |
| | carbon black [2] | - | 62 | - | - |
| | silica G115GR [3] | 62 | - | - | 62 |
| | silica VN3 [4] | - | - | 62 | - |
| | silane coupling agent [5] | 4.3 | - | 4.3 | 4.3 |
| | resorcinol-formaldehyde resin [6] | - | - | - | 1 |
| | antioxidant [7] | 2 | 2 | 2 | 2 |
| | zinc oxide [6] | 9 | 9 | 9 | 9 |
| | cobalt salt [9] | 1 | 1 | 1 | 1 |
| | stearic acid [10] | 0.5 | 0.5 | 0.5 | 0.5 |
| | sulfur [11] | 5 | 5 | 5 | 5 |
| | vulcanization accelerator [12] | 1 | 1 | 1 | 1 |
| | hexamethylmethoxymelamine [13] | - | - | - | 1.5 |
| Mooney viscosity | | 90 | 100 | 120 | 95 |
| complex moduli of elasticity (MPa) | | 7.1 | 7.9 | 8.3 | 7.9 |

1)    "TSR 20 grade".

2)    "N326" available from Mitsubishi Chemical Corporation.

3)    Silica having a BET surface area of 120 $m^2/g$.

4)    Silica having a BET surface area of 175 $m^2/g$.

5)    "Si 266" available from Degussa corporation.

6)    "Sumikanol 620" available from Sumitomo Chemical Co., Ltd.

7)    "NOCRAC 6C" available from OUCHISHINKO CHEMICAL INDUSTRIAL CO., LTD.

8)    Zinc oxide no. 1 available from MITSUI MINING & SMELTING CO., LTD.

9)    "COST-F" available from DAINIPPON INK AND CHEMICALS, INC.

10)    Available from NOF CORPORATION.

11)    "Cristex HSOT 20" available from Flexis Inc.

12)    "NOCCELER NS" available from OUCHISHINKO CHEMICAL INDUSTRIAL

CO., LTD.

13)     "Sumikanol 507" available from Sumitomo Chemical Co., Ltd.

The obtained coating rubber compound was processed using a calendar roll to be a thin film of 1 mm or less in thickness, and used to coat a steel cord to prepare a material for a breaker. If the rubber compound has a Mooney viscosity excessively increased then when it is processed it can generate a large quantity of heat. Accordingly, to prevent Mooney viscosity from excessively increasing, a line was adjusted in speed as appropriate.

The obtained breaker's material was cut to have a prescribed length and width corresponding to a single tire. To prevent the breaker's cut edge of the steel cord from having a portion uncoated with the coating rubber compound as it shrinks, the portion had stuck thereon an edge strip of rubber processed in the form of a sheet having a thickness within a range of 0.3 to 2 mm as rubber coating the breaker's cut edge.

Thus a 195/65R15 S range tire was produced and evaluated, as follows:

Length of Breaker's Cut Edge Separated After a 60,000 km Run

The produced tire was attached to a vehicle and ran at 80 km/h with a load of 140% for 60,000 km. Thereafter the tire was examined to evaluate how as seen in a direction along a cross section a breaker had a cut edge separated in length, i.e., how at least two breakers separate from each other in length is measured at eight location of the tire and averaged, as shown in Table 2.

Rolling Resistance

The produced tire was attached to a normal rim (6JJ x 16) and a rolling resistance tester available from STL Corporation is used to measure the tire's rolling resistance for an internal pressure of 230 kPa, a rate of 80 kmh, and a load of 49 N. The rolling resistance as measured was divided by the load to obtain a rolling resistance constant (RRC), for which present examples' rolling resistances and comparative examples' rolling resistances were obtained, as follows:

$$(\text{rolling resistance of comparative example 1/that of each present or}$$

$$\text{comparative example}) \times 100$$

as a relative value. Larger relative values indicate smaller rolling resistance and hence more satisfactory performance. The result is shown in Table 2

Table 2

|  | ex. 1 | ex. 2 | comparative ex.1 | comparative ex.2 |
|---|---|---|---|---|
| edge strip of rubber | present | absent | absent | absent |
| separation of breaker's cut edge in height after a 60,000 km run | 1 mm | 5 mm | 2 mm | 10 mm |
| rolling resistance | 104 | 105 | 100 | 103 |

Table 2 shows that comparative examples 1 and 2 after a 60,000 km run had their breakers having their edges separated in length by 2 mm and 10 mm, respectively, and present example 2 employing the present tire also provided such separation of 5 mm in length, whereas present example 1 allowing a breaker to have a cut edge coated with the edge strip's rubber compound provided such separation of 1 mm in length. Thus it can be seen from the present invention that providing a breaker's cut edge of steel cord with an edge strip's rubber compound, as in present example 1, can prevent the steel cord from being insufficiently coated.

Furthermore, comparative examples 1 and 2 provide indices of rolling resistance of 100 and 103,respectively, whereas the present examples 1 and 2 employing the present tire provide indices of rolling resistance of 104 and 105, respectively. It can be seen that the present examples' pneumatic tires provide reduced rolling resistance.

These result show that the present pneumatic tire can provide satisfactorily reduced rolling resistance and furthermore if a breaker has a cut edge of steel cord provided with an edge strip of rubber the breaker can have the cut edge coated satisfactorily.

Although the present invention has been described and illustrated in detail, it is clearly understood that the same is by way of illustration and example only and is not to be taken by way of limitation, the scope of the present invention being limited only by the terms of the appended claims.

**Claims**

1.  A pneumatic tire having a reinforcement layer formed of a steel cord coated with coating rubber, said reinforcement layer being at least one of a carcass (5), a bead reinforcement layer (7), a side reinforcement layer (8) and a belt (6), said coating rubber being formed of a rubber compound containing 100 parts by mass of diene rubber, 30 to 80 parts by mass of silica having a nitrogen surface area of at least 70 m$^2$/g and at most 150 m$^2$/g, and organic acid cobalt salt, **characterized in that** the rubber compound contains 1 to 15 parts by mass of a silane coupling agent.

2.  The pneumatic tire according to claim 1, wherein an edge strip of rubber (9) is provided to coat said steel cord of a cut edge of a breaker.

3.  The pneumatic tire according to claim 2, wherein said edge strip of rubber (9) is formed of a rubber compound containing 100 parts by mass of diene rubber, 30 to 80 parts by mass of silica having a nitrogen surface area of at least 70 m$^2$/g and at most 150 m$^2$/g, and 1 to 15 parts by mass of a silane coupling agent.

4.  The pneumatic tire according to claim 3, wherein said edge strip's rubber compound contains organic acid cobalt salt.

5.  The pneumatic tire according to claim 2, wherein a complex modulus of elasticity (A) of said edge strip's rubber compound and a complex modulus of elasticity (B) of said coating rubber's rubber compound, satisfy $^{(A)}/_{(B)} > 1$.

6.  The pneumatic tire according to claim 2, wherein said edge strip's rubber compound and/or said coating rubber's rubber compound contain(s) a resin containing resorcinol as a main component.

7.  The pneumatic tire according to claim 1, wherein said silane coupling agent is represented by a general formula:

$$(RO)_3\text{-Si-}(CH_2)_x\text{-}(S)_n\text{-}(CH_2)_x\text{-Si-}(OR)_3 \qquad (I)$$

wherein "R" represents an alkyl group having a straight or branched chain of 1-8 carbon atoms and "x" represents an integer of 1-8, and a molecule with n = 2 has a proportion of 60% by mass of an entirety of said silane coupling agent and "n" has an average value falling within a range of 2 to 3.

8.  A method of producing a pneumatic tire having a reinforcement layer formed of a steel cord coated with coating rubber, said reinforcement layer being at least one of a carcass (5), a bead reinforcement layer (7), a side reinforcement layer (8) and a belt (6), the method comprising the step of:

    kneading 100 parts by mass of diene rubber, 30 to 80 parts by mass of silica having a nitrogen surface area of at least 70 m$^2$/g and at most 150 m$^2$/g, 1 to 15 parts by mass of a silane coupling agent, and organic acid cobalt salt together at at least 130°C and at most 160°C to form a rubber compound for said coating rubber; and employing said rubber compound to coat said steel cord to form a reinforcement layer.

**Patentansprüche**

1.  Luftreifen mit einer Verstärkungsschicht gebildet aus einem mit einem Beschichtungsgummi beschichteten Stahlkord, wobei die Verstärkungsschicht wenigstens eine ausgewählt aus einer Karkasse (5), einer Wulstverstärkungsschicht (7), einer Seitenverstärkungsschicht (8) und einem Gürtel (6) ist, wobei der Beschichtungsgummi aus einer Kautschukverbindung ausgebildet ist, welche 100 Massenteile Dienkautschuk, 30 bis 80 Massenteile Silica mit einer durch Stickstoffadsorption gemessenen spezifischen Oberfläche von wenigstens 70 m$^2$/g und von maximal 150 m$^2$/g sowie ein Kobaltsalz einer organischen Säure enthält, **dadurch gekennzeichnet, dass** die Kautschukverbindung 1 bis 15 Massenteile eines Silankupplungsmittels enthält.

**2.** Luftreifen nach Anspruch 1, in dem ein Randstreifen aus Gummi (9) vorgesehen ist, um den Stahlkord einer Schnittkante eines Breakers zu beschichten.

**3.** Luftreifen nach Anspruch 2, wobei der Randstreifen aus Gummi (9) aus einer Kautschukverbindung ausgebildet ist, welche 100 Massenteile Dienkautschuk, 30 bis 80 Massenteile Silica mit einer durch Stickstoffadsorption gemessenen spezifischen Oberfläche von wenigstens 70 m$^2$/g und von maximal 150 m$^2$/g sowie 1 bis 15 Massenteile eines Silankupplungsmittels enthält.

**4.** Luftreifen nach Anspruch 3, wobei die Randstreifengummizusammensetzung ein Kobaltsalz einer organischen Säure enthält.

**5.** Luftreifen nach Anspruch 2, wobei das komplexe Elastizitätsmodul (A) der Randstreifengummizusammensetzung sowie das komplexe Elastizitätsmodul (B) der Beschichtungsgummizusammensetzung (A)/(B)>1 genügen.

**6.** Luftreifen nach Anspruch 2, wobei die Kautschukverbindung des Randstreifens und/oder die Kautschukverbindung des Beschichtungsgummis ein Resorcin als ein Hauptbestandteil enthaltendes Harz enthält/ enthalten.

**7.** Luftreifen nach Anspruch 1, wobei das Silankupplungsmittel durch die nachfolgende Formel wiedergegeben wird:

$$(RO)_3\text{-}Si\text{-}(CH_2)_x\text{-}(S)_n\text{-}(CH_2)_x\text{-}Si\text{-}(OR)_3 \qquad (I),$$

worin "R" eine Alkylgruppe mit einer geraden oder einer verzweigten Kette aus 1 bis 8 Kohlenstoffatomen bedeutet und "x" eine ganze Zahl zwischen 1 und 8 bedeutet, und ein Molekül mit n = 2 einen Anteil von 60 Massen-% der Gesamtheit des Silankupplungsmittels aufweist und "n" ein Zahlenwert ist, welcher innerhalb eines Bereiches zwischen 2 und 3 fällt.

**8.** Verfahren zum Herstellen eines Luftreifens mit einer Verstärkungsschicht gebildet aus einem mit einem Beschichtungsgummi beschichteten Stahlkord, wobei die Verstärkungsschicht wenigstens eine ausgewählt aus einer Karkasse (5), einer Wulstverstärkungsschicht (7), einer Seitenverstärkungsschicht (8) und einem Gürtel (6) ist, wobei das Verfahren die Schritte umfasst:

Kneten von 100 Massenteilen Dienkautschuk, 30 bis 80 Massenteilen Silica mit einer durch Stickstoffadsorption gemessenen spezifischen Oberfläche von wenigstens 70 m$^2$/g und von maximal 150 m$^2$/g, 1 bis 15 Massenteilen eines Silankupplungsmittels und eines Kobaltsalzes einer organischen Säure miteinander bei wenigstens 130 °C und bei maximal 160 °C, um eine Kautschukverbindung für den Beschichtungsgummi zu bilden, und Einsetzen der Kautschukverbindung, um den Stahlkord zu beschichten, um eine Verstärkungsschicht auszubilden.

**Revendications**

**1.** Pneumatique ayant une couche de renfort formée d'une corde d'acier revêtue de caoutchouc de revêtement, ladite couche de renfort étant au moins l'une d'une carcasse (5), d'une couche de renfort de talon (7) d'une couche de renfort latérale (8) et d'une' ceinture (6), ledit caoutchouc de revêtement étant formé d'un composé de caoutchouc contenant 100 parties en masse de caoutchouc de diène, 30 à 80 parties en masse de silice ayant une aire de surface d'azote d'au moins 70 m$^2$/g et au plus 150 m&/g et un sel de cobalt d'acide organique, **caractérisé en ce que** le composé de caoutchouc contient de 1 à 15 parties en masse d'un agent de couplage au silane.

**2.** Pneumatique selon la revendication 1, dans lequel une bande de bord de caoutchouc (9) est prévue pour revêtir ladite corde en acier d'un bord de coupe d'une nappe sommet.

**3.** Pneumatique selon la revendication 2, dans lequel ladite bande de bord de caoutchouc (9) est formée d'un composé de caoutchouc contenant 100 parties en masse de caoutchouc de diène, 30 à 80 parties en masse de silice ayant une aire de surface d'azote d'au moins 70 m$^2$/g et au plus 150 m$^2$/g et 1 à 15 parties en masse d'un agent de couplage au silane.

**4.** Pneumatique selon la revendication 3, dans lequel ledit composé de caoutchouc de la bande de bord contient un sel de cobalt d'acide organique.

**5.** Pneumatique selon la revendication 2, dans lequel un module complexe d'élasticité (A) dudit composé de caoutchouc de bande de bord et un module complexe d'élasticité (B) dudit composé de caoutchouc du caoutchouc de revêtement, satisfont $^{(A)}/_{(B)} > 1$.

**6.** Pneumatique selon la revendication 2, dans lequel ledit composé de caoutchouc de bande de bord et / ou ledit composé de caoutchouc de caoutchouc de revêtement contiennent une résine contenant du résorcinol comme composant principal.

**7.** Pneumatique selon la revendication 1, dans lequel ledit agent de couplage au silane est représenté par une formule générale :

$$(RO)_2\text{-Si-}(CH_2)_x\text{-}(S)_n\text{-}(CH_2)_x\text{-Si-}(OR)_3 \qquad (I)$$

dans laquelle « R » représente un groupe alkyle ayant une chaîne droite ou ramifiée de 1 à 8 atomes de carbone et « x » représente un entier de 1 à 8 et une molécule avec n = 2 a une proportion de 60 % en masse d'une globalité dudit agent de couplage du silane et « n » a une valeur moyenne se trouvant à l'intérieur d'une plage de 2 à 3.

**8.** Procédé de production d'un pneumatique ayant une couche de renfort formée d'une corde d'acier revêtue avec un caoutchouc de revêtement, ladite couche de renfort étant au moins l'une d'une carcasse (5), d'une couche de renfort de talon (7), d'une couche de renfort latérale (8) et d'une ceinture (6), le procédé comprenant l'étape consistant à :

malaxer 100 parties en masse de caoutchouc de diène, 30 à 80 parties en masse de silice ayant une aire de surface d'azote d'au moins 70 $m^2$/g et au plus 150 $m^2$/g, 1 à 15 parties en masse d'un agent de couplage au silane et un sel de cobalt d'acide organique ensemble à au moins 130 °C et au plus 160 °C pour former un composé de caoutchouc pour ledit caoutchouc de revêtement ; et
utiliser ledit composé de caoutchouc pour revêtir ladite corde en acier pour former une couche de renfort.

FIG.1

**EP 1 659 000 B1**

**REFERENCES CITED IN THE DESCRIPTION**

**Patent documents cited in the description**

- JP 3252431 A
- JP 7196850 A
- JP 7017208 A
- JP 8230411 A
- JP 2000007839 A
- JP 2000234036 A
- JP 2003064222 A